# EUROPEAN PATENT APPLICATION

(11) **EP 4 364 945 A1**
(43) Date of publication of application: **08.05.2024**
(21) Application number: 22204872.0
(22) Date of filing: 01.11.2022
(51) Int. Cl.: B32B 33/00, B32B 3/26, B32B 5/02, B32B 5/14, B32B 27/08, B32B 27/12, B32B 27/18

(54) **MACHINABLE MOLDED FRETTING BUFFER**

(71) Applicant: Roller Bearing Company of America, Inc., Oxford, CT 06478 (US)
(72) Inventor: LOUTZENHEISER, Andrew, Tucson (US); STUTZ, Anne Marie, Vail (US)
(74) Representative: Bjerkén Hynell KB

(57) **Abstract**

A wear resistant composite material (200) includes a first thickness of material (210), a second thickness of material (214), and a thickness of wear indicator (218) located between and engaging the first thickness of material (210) and the second thickness of material (214). The thickness of wear indicator (218) has a colorant therein.

## Description

### Technical Field

The present invention is directed to a homogeneous fiber reinforced fretting buffer that protects faying surfaces of both non-ferrous and ferrous material, from succumbing to fretting damage such as fretting corrosion, fretting wear, or fretting pitting that may result from contact between materials under load.

### Background

Fretting refers to wear and sometimes corrosion damage at the asperities of contact surfaces. This damage is induced under load and in the presence of repeated relative surface motion, as induced for example by vibration. Fretting can be defined as a special wear process that occurs at the contact area between two materials under load and subject to minute relative motion by vibration or some other force. Fretting tangibly downgrades the surface layer quality producing increased surface roughness and micro pits, which reduces the fatigue strength of the components, and can lead to catastrophic failure of materials under load.

The contact movement causes mechanical wear and material transfer at the surface, often followed by oxidation of both the metallic debris and the freshly exposed metallic surfaces. Because the oxidized debris is usually much harder than the surfaces from which it came, it often acts as an abrasive agent that increases the rate of fretting.

To reduce or eliminate fretting, a fretting buffer can be used to protect or shield a structure from the detrimental effects of fretting.

One particular need is to eliminate fretting damage in aircraft applications, for example between the aluminum/titanium fuselage sections that are connected in the assembly of an aircraft. Another such need is elimination of fretting damage between engine nacelle panels and sections of jet turbine engines. These structures, which must be lightweight, are prone to flexing and strain which can result in wear and fatigue damage to the nacelle.

An engine nacelle acts as a cover to streamline airflow over a jet engine and is also a structure element surrounding the jet engine. The nacelle must be modular for assembly and for access to the engine for maintenance. Nacelles typically have doors that open on the cylindrical sides that need to close tightly and mate with a streamlined nose section of the nacelle. For example, the doors may take the form of clamshell cowls that have tongue-in-groove connections that seal and secure opposing sections of the cowls to one another. The interface at the tongue-in-groove connection is subject to vibratory loads that are known to cause fretting at the interfacing surfaces. The grooves and tongue portions are typically V-shaped or U-Shaped circumferential channels that have a bottom and two opposing side walls. Typically, there are arcuate junctions between each side wall and the bottom of the channel. Efforts to install fretting buffers in the grooves and in particular on the arcuate junctions have required them to be installed in three segments (i.e., on each of the walls and on the bottom). Such a three-piece configuration employed a fillet to join each of the buffers on the side walls to the buffer on the bottom of the channel. This configuration created a void under the fillet and between the arcuate junctions and leaving the arcuate junctions with no buffer attached thereto. Such prior art arrangements are time consuming and difficult to install and do not address fretting problems on the arcuate junctions. In addition, the post installation condition (e.g., wear and thickness) of prior art buffers is difficult to determine because edges of the buffer, for example at the arcuate junctions, are covered by the fillets. Furthermore, prior art buffers tend to have accelerating wear processes because of wear debris accumulating on the buffer and acting as an abrasive that increases wear of the buffer.

Displacement and strains from flight loads and temperature variations cause movement between the nacelle sections. A nacelle can be quite large on today's by-pass engines, also called two stream engines. The inlet diameters on nacelles can range from approximately 10 inches (25.4 cm) to over 100 inches (254 cm), or larger. The nacelles are typically manufactured from lightweight materials such as aluminum alloys (2024, 6061, 7050 families, etc.), Titanium alloys (6Al-4V, 6Al-2Sn-4Mo-2Sn, etc.), and composite materials. The aluminum and titanium alloys are prone to galling, fretting, and abrasive wear failure where they are in intimate contact on faying surfaces.

The complex shape of nacelles and wing designs and overall loading on the engine can lead to non-symmetrical loading on nacelles, thus the wear or fretting damage will not be consistent all the way around the nacelle.

Based on the foregoing, there is a need to provide a fretting buffer that can be easily formed into the shape of clips, springs, pads, rails, and gasket materials and can easily be fit between sections of nacelle panels and on arcuate or curved surfaces to prevent wear and fretting damage.

Traditionally, the systematic replacement of wear-resistant composite materials that protect mechanical components or other surfaces is based upon an anticipated composite service life schedule or when the wear-resistant composite material has completely worn away. Existing methods for determining the service life of wear-resistant composite materials are economically disadvantageous to users as they can result in either early or late replacement of the composite. Early replacement does not take full advantage of a wear-resistant composite's actual service life. Late replacement can result in catastrophic mechanical damage when a wear-resistant composite material has worn away.

Thus, there is a need for an improved method for determining the condition of wear-resistant composite materials.

### Summary

There is disclosed herein a wear resistant composite material. The wear resistant composite material includes a first thickness of material that has a wear surface, a second thickness of material that has an exterior surface, and a thickness of wear indicator that is located between and engaging the first thickness of material and the second thickness of material. The thickness of wear indicator has one or more colorants therein. The wear resistant composite material has an initial overall thickness that is measured between the wear surface and the exterior surface. The thickness of wear indicator is configured to provide visual indicia of wear of the wear surface.

In some embodiments, the first thickness of material, the second thickness of material, and the thickness of wear indicator include a first chemical composition.

In some embodiments, the first thickness of material includes a first chemical composition, the second thickness of material includes a second chemical composition, and the thickness of wear indicator includes a third chemical composition.

In some embodiments, the first thickness of material and the second thickness of material include a first chemical composition, and the thickness of wear indicator includes a second chemical composition.

In some embodiments, the first thickness of material, the second thickness of material, and the thickness of wear indicator are integrally formed with one another.

In some embodiments, the first thickness of material, the second thickness of material, and the thickness of wear indicator are distinct layers.

In some embodiments, the thickness of wear indicator includes an organic or synthetic textile.

In some embodiments, the organic or synthetic textile is one includes more of polyester, nylon, carbon fiber veil, fiberglass veil, silicone, silica, acrylic, rayon, aramids, polybenzimidazole fiber, polypropylene, and ultra-high-molecular-weight polyethylene.

In some embodiments, the thickness of wear indicator includes a laminate material.

In some embodiments, the laminate material includes one or more of a coated glass fabric and a parting film.

In some embodiments, the thickness of wear indicator includes at least one of a colored synthetic pigment powder or paste, a composite resin, a fiberglass and composite paint, and a polypropylene coating.

In some embodiments, the one or more colorants include a gradient color scheme or two or more colors present in the thickness of wear indicator.

In some embodiments, the gradient color scheme or two or more colors includes a change in color in the thickness of wear indicator between the first thickness of material and the second thickness of material.

In some embodiments, the one or more colorants include a pattern that extends laterally across the thickness of wear indicator.

In some embodiments, the pattern includes two or more colors.

In some embodiments, the thickness of wear indicator is uniform in thickness.

In some embodiments, the thickness of wear indicator is non-uniform in thickness.

### Brief Description of the Drawings

FIG. 1 is an isometric view of one non-limiting embodiment of the fretting buffer.
FIG. 2 is a cross sectional view of the fretting buffer conformed to a complex curve.
FIG. 3A is a plan view of a slotted fretting buffer shown in the as manufactured state.
FIG. 3B is a plan view of the slotted fretting buffer shown with the conformed state superimposed over the slotted buffer of FIG. 3A and conformed over a convex surface.
FIG. 3C is an enlarged view of detail 3C of the slotted fretting buffer of FIG. 2 shown in a conformed state and conformed over a convex surface.
FIG. 3D is an enlarged view of detail 3D of FIG. 3C.
FIG. 3E is an enlarged view of detail 3E of FIG. 3C.
FIG. 4 is a cross sectional view of a fretting buffer including wear indicators.
FIG. 5 is a cross section view of the fretting buffer of FIG. 1 as assembled between engine nacelle components.
FIG. 6 is another embodiment of the fretting buffer of FIG. 1 showing slots therein.
FIG. 7 is a top perspective view of a wear resistant composite material of the present invention.
FIG. 8 is a side perspective view of a wear resistant composite material of the present invention.
FIG. 9 is a cross sectional schematic view of the wear resistant composite material of the present invention taken across section A-A of FIG. 7 and showing the wear resistant composite material positioned between two substrates.
FIG. 10 is a cross sectional schematic view of another embodiment of the wear resistant composite material of the present invention.

### Detailed Description

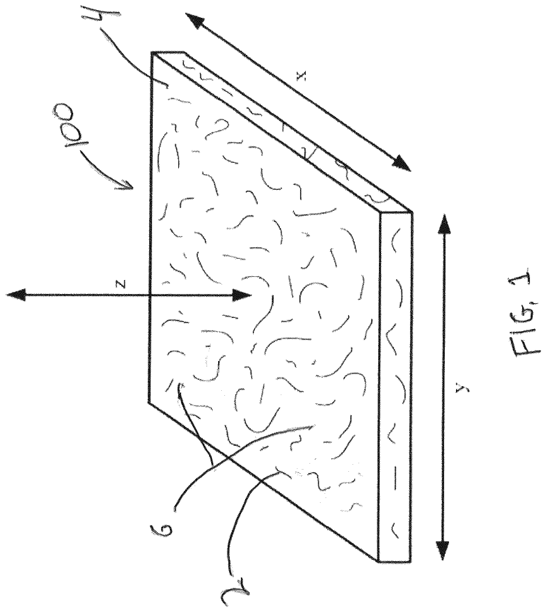

As shown in FIG. 1, the fretting buffer 100 is a substantially homogeneous fiber reinforced composite material that protects faying surfaces from succumbing to fretting damage such as fretting corrosion, fretting wear, fretting pitting, etc.

The fretting buffer 100 includes a plurality of reinforcing fibers 2 dispersed throughout a matrix, such a resin, 4. The matrix or resin system 4 is infused between and encapsulates the plurality of reinforcing fibers 2. In one embodiment, the fretting buffer 100 and matrix 4 are formed into a sheet.

The plurality of reinforcing fibers 2 are manufactured from a material such as fiberglass, polyethylene terephthalate (sometimes written poly(ethylene terephthalate), commonly abbreviated PET or PETE), polyester, cotton, a meta-aramid material, polytetrafluoroethylene (PTFE), and/or a para-aramid synthetic material. The matrix or resin system includes polyester, epoxy, phenolic, urethane, polyimide, and/or polyamide material, other thermoplastic or thermoset polymers, composites, ceramics, or metals.

In one embodiment, a lubricant 6 is dispersed throughout the matrix 4. The lubricant 6 can include a plurality of lubricating fibers, whiskers, or nano-particles manufactured from a polytetrafluoroethylene (PTFE) material, a nylon, and/or a graphite. The lubricant 6 can be PTFE, polypropylene, polyethylene, acetal, graphite, nylon, molybdenum disulfide, boron nitride, a low-surface-energy plastic, or a combination of any of these materials.

In one embodiment, the fretting buffer 100, in a low abrasive form, the plurality of reinforcing fibers 2 is polyester based non-woven felt which can be used against bare aluminum alloy such as 2000 series (2024, 2014 for example), 6000 series (6061 for example), and 7000 series aluminum (7050, 7075 for example), titanium alloys (6Al-4V, 10-2-3, 5-5-5-5-3, 6-2-4-2), and CRES alloys (17-4PH, 15-PH, 13-8PH, nitronic 60), or superalloys such as Inconel718, 625, and A286. Additionally, the low abrasion fretting buffer 100 can be used against a PTFE filled polyurethane top coat anti-chafe paint as discussed below.

In some embodiments, the lubricant 6 in the fretting buffer 100, includes non-woven polytetrafluoroethylene (PTFE) fibers or whiskers that make it more creep resistant than known machinable PTFE self-lubricating systems. Additionally, known non-woven liners require metal backing whereas the instant fretting buffer 100 can stand alone as a bearing surface, can be formed into a shape by hand pressure, and can provide a low friction surface capable of wearing against metallic surfaces and polyurethane PTFE painted surfaces.

In some embodiments, the fretting buffer 100 is manufactured as a composite sheet that is substantially homogenous and machinable. By machining standard strips or sheets of the fretting buffer 100, economies of scale are realized thereby lowering costs for manufacture and reducing the number of parts to carry in inventory, permitting a "one size fits all" approach. The fretting buffer 100 is scalable in size and shape (e.g., sheets, strips, etc.), and can be produced for parts from about 3/16 inches (0.47625 cm) to about 10 feet (3.05 m) and greater. Large hoops or other shapes can be made in one-piece, multiple pieces or laminate sheets or strips because the fretting buffer 100 can be mechanically assembled or laminated. The fretting buffer 100 can be manufactured in the form of a rectangular flat sheet having a width x, a length y and a thickness z. Thicknesses of the fretting buffer can be from about 0.020 inches (0.0508 cm) to 0.100 inches (0.254 cm) or greater.

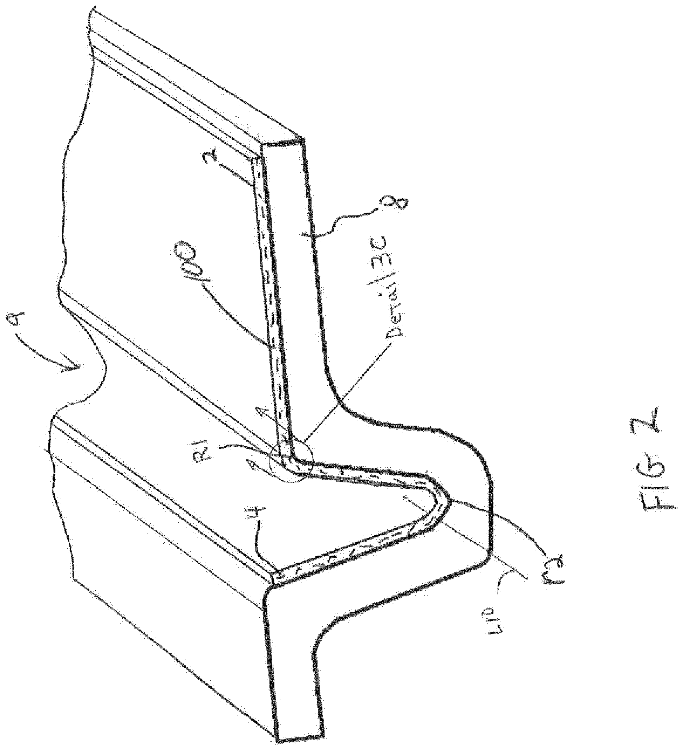

The fretting buffer 100 is semi-rigid and yet flexible enough to allow it to conform to the irregular or curved surfaces. As shown in FIG. 2, the fretting buffer 100 can be formed into or onto both inside radii R2 of curvature and outside radii R1 of a structural component 8 having a V-shaped groove 9 formed therein, while maintaining a required thickness (t). Relief slots 10 as discussed herein can be machined into the fretting buffer 100 to provide strain relief and additional flexibility for increased conformation to the inside radii R2 of curvature or outside radii of curvature R1. The fretting buffer 100 is semi-rigid but retains a springy quality such that it can be used as a retention device in a spring retention system by forming it into a spring shape. The fretting buffer 100 is configured to be applied to flat surfaces, arcuate linear extending surfaces, and/or surfaces with three dimensional contours such as convex or concave spherical shaped surfaces. The fretting buffer 100 is configured to continuously cover, be adhered to, or wear against arcuate surfaces without the need to join individual pieces together with fillets for example.

The fretting buffer 100 can be mechanically retained and secured to the faying surface a structural component 8 or to any material requiring protection from fretting. The fretting buffer 100 can be secured using screws, rivets, nuts, nails, and the like, or can bonded with adhesives such as epoxies, phenolic resins, vinyl phenolic resins, acrylate-based adhesives, as well as other thermoset and thermoplastic resins. In addition, the fretting buffer 100 can be bonded directly to a substrate using its internal resin system or matrix 4.

The fretting buffer 100 is sufficiently tough thus preventing crack propagation should holes, slots, and unique cut outs be employed to facilitate mounting.

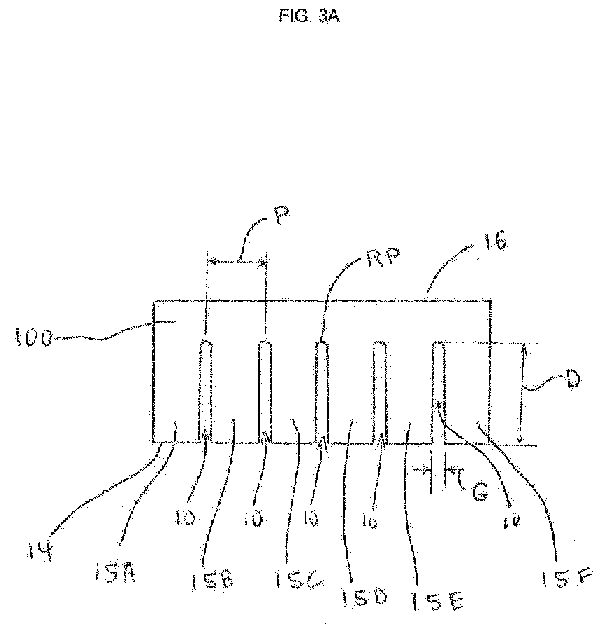

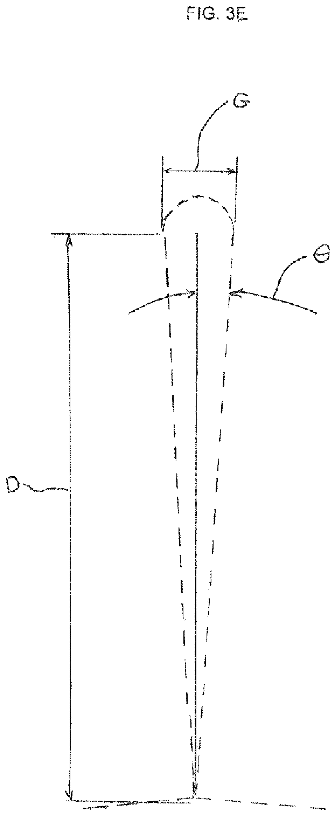

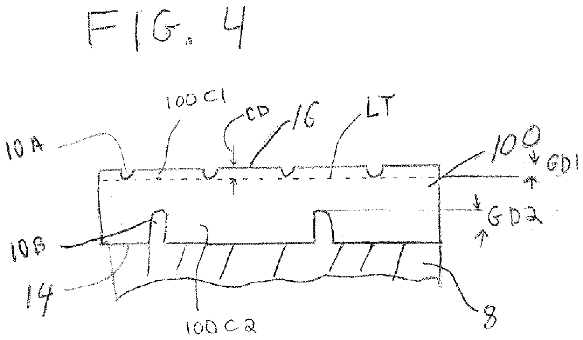

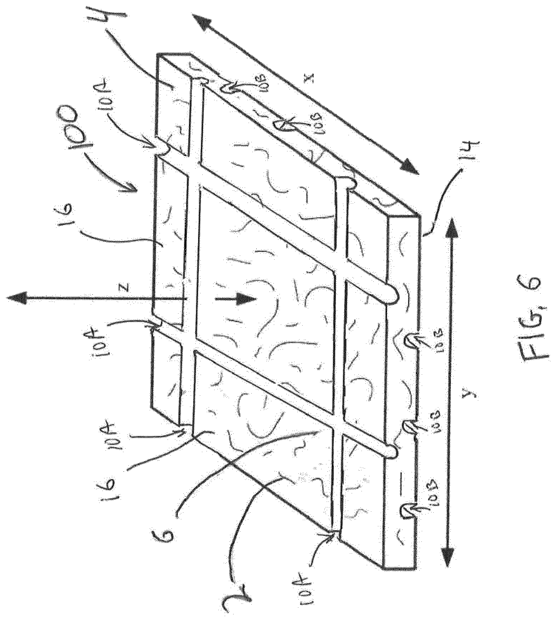

As shown in FIG. 3A the fretting buffer 100 has a slot 10 formed into the bonded side 14 of the fretting buffer 100 between leg 15A and leg 15B, a slot 10 formed between leg 15B and leg 15C, a slot 10 formed between leg 15C and leg 15D, a slot 10 formed between leg 15D and leg 15E, and a slot 10 formed between leg 15E and leg 15F. While the slots 10 are shown and described as being formed in the bonding side the present invention is not limited in this regard as the slots 10 may also be formed in the wear side 16, as shown in FIGS. 4, 5, and 6. As shown in FIG. 6, the slots 10 on the wear side 16 intersect one another (e.g., are oriented at an angle to one another and intersect at a junction therebetween) and the slots 10 on the bonding side 14 intersect one another (e.g., are oriented at an angle to one another and intersect at a junction therebetween) to accommodate conformation to three dimensional inside and outside radii of curvature such as convex and concave spherical shaped surfaces. The slots 10 are serrations or cut outs in certain regions, such as the top, bottom, sides, or combinations thereof, and the fretting buffer can be readily formed to follow unique contours. The slots 10, depending where they are placed and how large they are, can also create a safety or replacement wear indicator either by their appearance or disappearance when the fretting buffer 100 material is abraded or worn away as discussed herein. The fretting buffer 100 can be machined through use of manual and CNC controlled techniques, such as mills, lathes, water jet, etc., allowing the material to be modified to any desirable shape. The slots 10 can be milled or cut with a slitting wheel. The fretting buffer 100 is capable of being machined dry or with water soluble coolants using the following machining parameters: insert radius about 0.030-inch (0.0762 cm), surface speed of about 1000 SFM or higher; feed rate about .001/.003 inch (0.00254/0.00762 cm) per revolution. In one embodiment, the slots 11 run parallel to a longitudinal axis L10 of the V-shaped groove 9 in the structural component 8 and extend outwardly substantially perpendicular to a tangent of the outside radii of curvature R1 or inside radii of curvature R2.

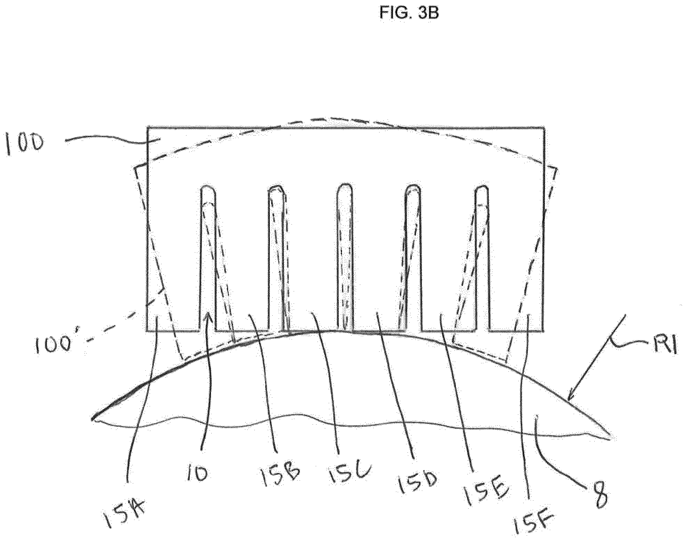

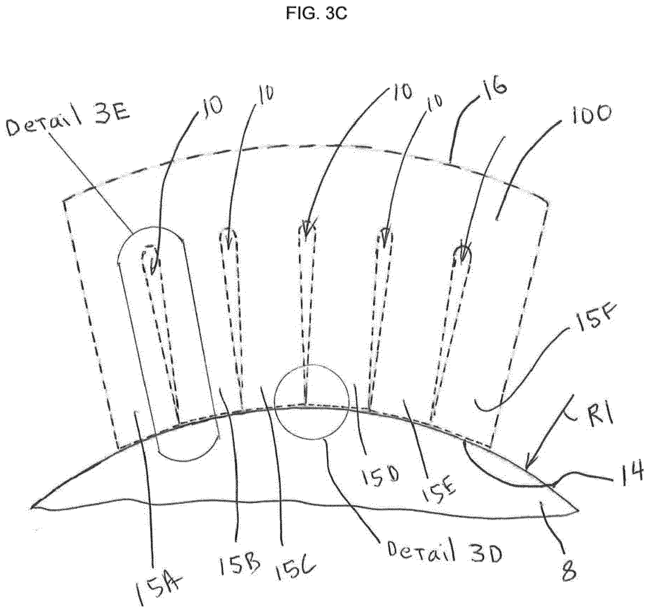

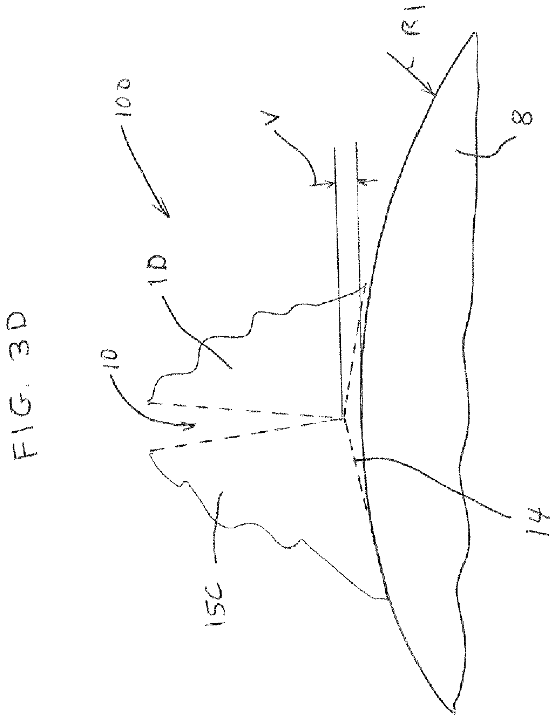

One such formula for calculating the slot detail to permit forming of the fretting buffer 100 on an outside radius R1 is shown in FIGS. 3A-3E. Referring to FIG 3A, a fretting buffer 100 has slots 10 that can be formed by machining. A pitch distance P is defined as the distance between centerlines of the slots 10. A gap G is defined by the width of each slot 10. A depth D is defined as the depth of each of the slots 10. The slots 10 include a radiused portion RP. As shown by the dashed lines in FIG. 3B, the slots 10 are formed to allow the fretting buffer 100 to conform to the outside radius R1. The outside radius R1 can be a portion of any structure or material requiring protection of a faying surface. FIGS. 3C and 3D illustrate the fretting buffer as fitted to the outside radius R1.

In this example, calculations are performed for an outside radius R1 equal to 1.000 in. (2.54 cm), a gap width G of 0.03 in. (0.0762 cm), and a slot depth of 0.25 in. (0.635 cm). The angle Θ, as shown in FIG. 3F, defines the angle required to close the gap G and can be calculated as the Θ = arctan (G/2D). The pitch distance P can be calculated as P= 2R1 tan (Θ) + G. Further, a void height V as shown in FIGS. 3D can be calculated as V= ((P-G)/2) sin (Θ). For this case, Θ = 3.4336 degrees, P = 0.15 inches (0.381 cm) and V= 0.0018 inches (0.004572 cm).

The slotting/serration details can be changed to readily accommodate varying thicknesses and layers of the fretting buffer 100. As shown in FIG. 4, the fretting buffer 100 can include slots 10A on the wear side 16 or slots 10B on the bonded side 14 of the fretting buffer or both. The slots 10A include a slot depth GD1 and the slots 10B have a slot depth GD2. The slot depths GD1 and GD2 are predetermined based on the requirements of any particular application. For example, slots 10A in the wear surface 16 can be sized such that when one or more of the slots 10A disappear or is less than a specified depth, the fretting buffer must be replaced. Likewise, slots 10B in the bonding surface 14 are sized to indicate replacement when the slot 10B becomes apparent in the wear surface 16.

The fretting buffer 100 can be applied to virtually any faying surface that requires protection from fretting due to applied loads. One particular application is for engine nacelle components 200 used to house a jet engine. The fretting buffer 100 acts to isolate the sections of engine nacelle panels and sections of a jet turbine engine which are prone to flexing and varying degrees of strain which result in wear and fatigue damage to the nacelle.

The fretting buffer 100 of the present invention is configured to be employed and installed in flat and arcuate mating surfaces (e.g., tongue-in-groove) of various aircraft components such as inlet cowls, fan cowls, thrust reversers, exhaust cones, exhaust nozzles, and pylons for housing jet engines. The fretting buffer 100 can be applied to stop fretting damage between any of the components which are susceptible to wear and fretting, for example, on the mating surfaces of the inlet cowl, or the mating surfaces of the fan cowl. The fretting buffer can also be applied, for example to mating surfaces which come into intimate contact when the inlet cowl is attached to the fan cowl. Likewise, other sections of the nacelle can be mated with the fretting buffer applied to one or both mating surfaces. Further, aluminum/titanium fuselage sections that are connected in the assembly of an aircraft can be protected from fretting by application of the fretting buffer to any mating surface that is susceptible to fretting.

Attempts to prevent fretting between the mating parts of an engine nacelle, manufactured from the same or different alloys have utilized polyurethane PTFE filled paints. These PTFE filled paints may resist chafing, but are not intended nor capable of sustaining high fretting and galling stresses caused by the flight loads on the engine nacelle. The non-woven, PTFE filled, and reinforced fretting buffer 100 can operate at stress levels 2500 psi (17237 kPa) and be uses to wear against polyurethane PTFE filled paints as well as metallic surfaces, at stress levels up to 25,000 psi (172369 kPa).

The superior wear rate of the non-woven PTFE filled fretting buffer 100 is shown in FIG. 6, fretting buffer against polyurethane PTFE filled paint wear graph. The test simulated a siding motion of +/-0.025 inch (0.00635 cm) (0.100 in. (0.0254 cm) total travel). The low abrasion non-woven PTFE filled fretting buffer 100 wore only 0.0009 inch (0.002286 cm) of the polyurethane PTFE filled paint. Advantageously, using a fretting buffer 100 that can run against paint provides for an additional layer of corrosion protection. Additionally, paint may be used on aluminum alloys rather than chemical conversion coatings that use hazardous chromate solutions, thus eliminating waste and reducing cost.

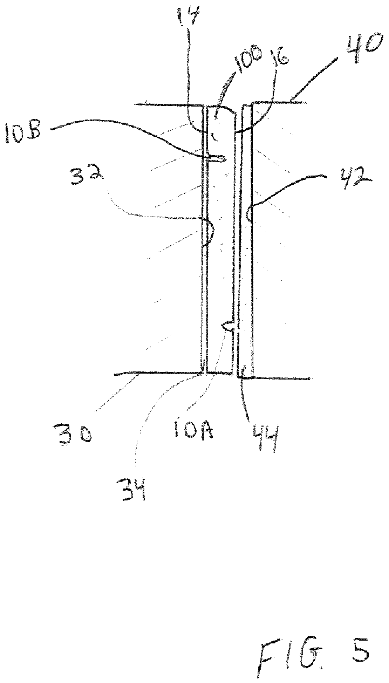

Referring to FIG. 5, a first nacelle component 30 has a first mating surface 32. In this example, the fretting buffer 100, including wear slots 10A and bonding side 14 is bonded to the first mating surface 32 using a structural adhesive 34. A second nacelle component 40 having a second mating surface 42, is coated with a polyurethane based PTFE filled paint 44. The first nacelle component 30 and the second nacelle component 40 are mounted in a fixed position such that the wear surface 16 of the fretting buffer 100 contacts the polyurethane based PTFE filled paint 44, which act as faying surfaces against one another. In some embodiments, the second mating surface 42 is a bare metal. However, the present invention is not limited in this regard as the second mating surface 42 may be a plated metal, coated with a high velocity oxygen fuel (HVOF) process, or ceramic coated.

In some embodiments, the fretting buffer 100 is capable of accepting a colorant, such as a dye or a pigment to match the existing color scheme of an airplane structure. The dye or pigment may be in the form of a liquid or powder that binds to the fretting buffer material in order to form a predetermined color. By coloring the fretting buffer 100, costs can be reduced and the need for additional painting to match the aircraft structure may be unnecessary. The colorant can be disbursed to form a homogeneous color throughout the structure of the fretting buffer, or can be added to form one or more layers of a predetermined color having one or more predetermined thicknesses. In one embodiment, different colorants are used at various thickness of the fretting buffer 100. For example, referring to FIG. 4, a first colorant 100C1 may be employed at a layer or thickness CD on one side of the dashed line LT of the fretting buffer 100 at the wear surface 16 and to a first predetermined depth CD from the wear surface 16 to match the existing color scheme of an airplane structure. A second colorant 100C2 may be employed at a second predetermined depth from the wear surface 16 to the bonding surface 14. The second predetermined depth is selected based upon a maximum wear depth. Thus, the second colorant 100C2 is configured as a wear indicator of the fretting buffer 100. While two colorants 100C1 and 100C2 are described, the present invention is not limited in this regard as more than two colorants or gradients of colorant may be employed.

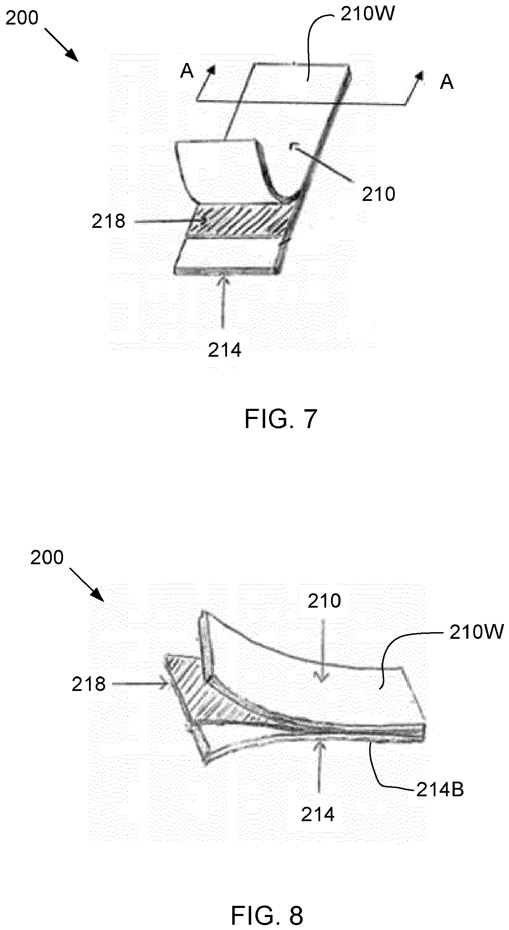

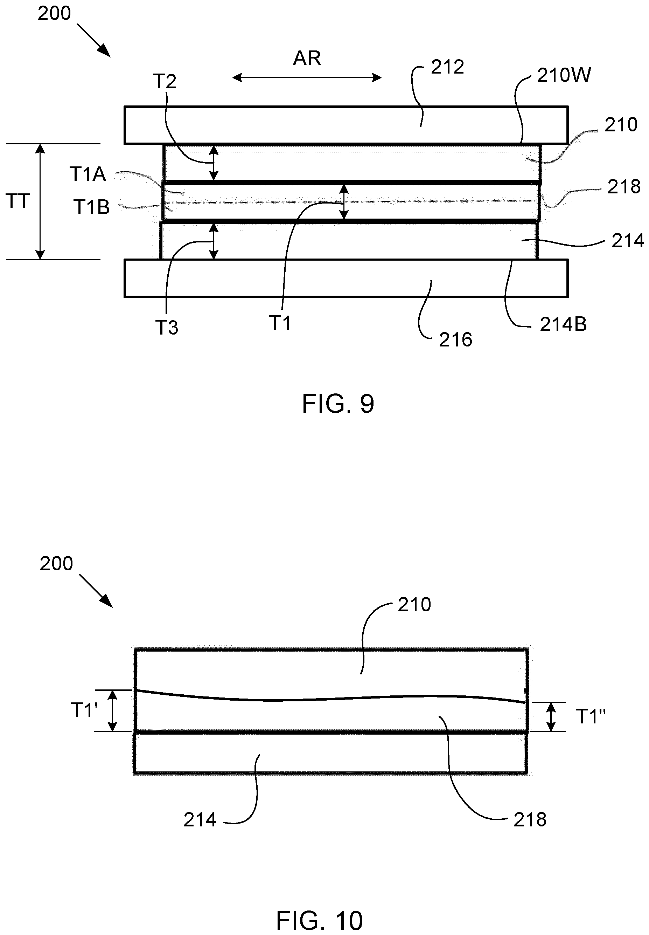

As shown in FIGS. 7-10, a wear resistant composite material is generally designated by the numeral 200. The wear resistant composite material 200 includes a first thickness (e.g., a layer, sheet, coating, film, overlay, or covering) of material 210 that has a wear surface 210W. The wear surface 210W is configured for sliding engagement (e.g., oscillatory or dithering movement) with a first substrate 212 as indicated by the arrow AR (see FIG. 9). The wear resistant composite material 200 includes a second thickness (e.g., a layer, sheet, coating, film, overlay, or covering) of material 214 having an exterior surface 214B. The exterior surface 214B is configured to be bonded to a second substrate 216 (see FIG. 9). The wear resistant composite material 200 includes a thickness (e.g., a layer, sheet, coating, film, overlay or covering) of wear indicator 218 located between and engaging the first thickness of material 210 and the second thickness of material 214. The thickness of wear indicator 218 has one or more colorants (e.g., vivid visually recognizable pigment or dye colorants) therein. In some embodiments, the first thickness of material 210, the second thickness of material 214, and the thickness of wear indicator 218 are integrally formed with one another. In some embodiments, the first thickness of material 210, the second thickness of material 214, and the thickness of wear indicator 218 are formed as distinct layers of the wear resistant composite material 200.

As shown in FIG. 9, the wear resistant composite material 200 has an initial overall thickness TT measured between the wear surface 210W and the exterior surface 214B. The first thickness of material 210 has a thickness T2. The thickness of wear indicator 218 has a thickness T1. The second thickness of material 214 has a thickness T3. In some embodiments, the thickness of wear indicator 218 has a first colorant thickness T1A and a second colorant thickness T1B. For example, the first colorant thickness T1A is a yellow color indicating a warning level of wear; and the second colorant thickness T1B is a red color indicating a wear limit has been reached or exceeded.

As the wear surface 210W wears as a result of sliding engagement with the first substrate 212, the thickness T2 of the first thickness of material 210 approaches a predetermined minimum or zero and the thickness of wear indicator 218 becomes visible and is eventually exposed. Such visible indication of the thickness of wear indicator 218 provides indicia that the wear resistant composite material 200 needs to be replaced.

While the thickness of wear indicator 218 is shown in FIG. 9 as being of the uniform thickness T1, the present invention is not limited in this regard as the thickness of wear indicator 218 may be contoured and have a non-uniform thickness T1' and T1", as shown in FIG. 10. The magnitude of the thicknesses T1" and T1" are selected to correspond to parameters (e.g., load, velocity, geometry, temperature, and coefficient of friction) of the interface between the wear surface 210W and the first substrate 212.

In some embodiments, the first thickness of material 210, the second thickness of material 214, and the thickness of wear indicator 218 each have a first chemical composition (i.e., the first thickness of material 210, the second thickness of material 214, and the thickness of wear indicator 218 each have the same chemical composition). In some embodiments, the first thickness of material 210 has a first chemical composition, the second thickness of material 214 has a second chemical composition, and the thickness of wear indicator 218 has a third chemical composition (i.e., the first thickness of material 210, the second thickness of material 214, and the thickness of wear indicator 218 each have different chemical compositions). In some embodiments, the first thickness of material 210 and the second thickness of material 214 each have a first chemical composition, and the thickness of wear indicator 218 has a second chemical composition (i.e., the first thickness of material 210 and the second thickness of material 214 each have the same chemical composition, while the thickness of wear indicator 218 has a chemical composition that is different from the chemical composition of the first thickness of material 210 and the second thickness of material 214). In some embodiments, the first thickness of material 210 and the thickness of wear indicator 218 each have a first chemical composition, and the second thickness of material 214 has a second chemical composition (i.e., the first thickness of material 210 and the thickness of wear indicator 218 each have the same chemical composition, while the second thickness of material 214 has a chemical composition that is different from the chemical composition of the first thickness of material 210 and the thickness of wear indicator 218). In some embodiments, the second thickness of material 214 and the thickness of wear indicator 218 each have a first chemical composition, and the first thickness of material 210 has a second chemical composition (i.e., the second thickness of material 214 and the thickness of wear indicator 218 each have the same chemical composition, while the first thickness of material 210 has a chemical composition that is different from the chemical composition of the second thickness of material 214 and the thickness of wear indicator 218).

In some embodiments, the thickness of wear indicator 218 includes an organic or synthetic textile, such as polyester, nylon, carbon fiber veil, fiberglass veil, silicone, silica, acrylic, rayon, aramids, polybenzimidazole fiber, polypropylene, ultra-high-molecular-weight polyethylene, etc., and combinations thereof. In some embodiments, the thickness of wear indicator 218 includes a laminate material, such as coated glass fabric, parting film, etc., and combinations thereof. In some embodiments, the thickness of wear indicator 218 includes an organic or synthetic coating, such as colored synthetic pigment powder or paste, composite resin, fiberglass and composite paint, polypropylene coating, etc., and combinations thereof.

In some embodiments, the one or more colorants include a gradient color scheme or two or more colors present in the thickness of wear indicator 218. The gradient color scheme or two or more colors are configured to indicate a change in color along the thickness T1 of the thickness of wear indicator 218 as measured between the first thickness of material 210 and the second thickness of material 214. In some embodiments, the one or more colorants includes a pattern of two or more colors that extends laterally across the thickness of wear indicator 218. The colors of the one or more colorants (e.g., the gradient color scheme, two or more colors, or pattern of two or more colors extending along the thickness T1 of, and/or extending laterally across, the thickness of wear indicator 218) are selected to correspond to parameters (e.g., load, velocity, geometry, temperature, and coefficient of friction) of the interface between the wear surface 210W and the first substrate 212.

As will be apparent to those skilled in the art, various modifications, adaptations, and variations of the foregoing specific disclosure can be made without departing from the scope of the invention claimed herein. The various features and elements of the invention described herein may be combined in a manner different than the specific examples described or claimed herein without departing from the scope of the invention. In other words, any element or feature may be combined with any other element or feature in different embodiments, unless there is an obvious or inherent incompatibility between the two, or it is specifically excluded.

References in the specification to "one embodiment," "an embodiment," "some embodiments," etc., indicate that the embodiment described may include a particular aspect, feature, structure, or characteristic, but not every embodiment necessarily includes that aspect, feature, structure, or characteristic. Moreover, such phrases may, but do not necessarily, refer to the same embodiment referred to in other portions of the specification.

The singular forms "a," "an," and "the" include plural reference unless the context clearly dictates otherwise. Thus, for example, a reference to "a plant" includes a plurality of such plants. It is further noted that the claims may be drafted to exclude any optional element. As such, this statement is intended to serve as antecedent basis for the use of exclusive terminology, such as "solely," "only," and the like, in connection with the recitation of claim elements or use of a "negative" limitation. The terms "preferably," "preferred," "prefer," "optionally," "may," and similar terms are used to indicate that an item, condition, or step being referred to is an optional (not required) feature of the invention.

The term "and/or" means any one of the items, any combination of the items, or all of the items with which this term is associated. The phrase "one or more" is readily understood by one of skill in the art, particularly when read in context of its usage.

Each numerical or measured value in this specification is modified by the term "about." The term "about" can refer to a variation of ± 5%, ± 10%, ± 20%, or ± 25% of the value specified. For example, "about 50" percent can in some embodiments carry a variation from 45 to 55 percent. For integer ranges, the term "about" can include one or two integers greater than and/or less than a recited integer at each end of the range. Unless indicated otherwise herein, the term "about" is intended to include values and ranges proximate to the recited range that are equivalent in terms of the functionality of the composition, or the embodiment.

As will be understood by the skilled artisan, all numbers, including those expressing quantities of reagents or ingredients, properties such as molecular weight, reaction conditions, and so forth, are approximations and are understood as being optionally modified in all instances by the term "about." These values can vary depending upon the desired properties sought to be obtained by those skilled in the art utilizing the teachings of the descriptions herein. It is also understood that such values inherently contain variability necessarily resulting from the standard deviations found in their respective testing measurements.

As will be understood by one skilled in the art, for any and all purposes, particularly in terms of providing a written description, all ranges recited herein also encompass any and all possible sub-ranges and combinations of sub-ranges thereof, as well as the individual values making up the range, particularly integer values. A recited range includes each specific value, integer, decimal, or identity within the range. Any listed range can be easily recognized as sufficiently describing and enabling the same range being broken down into at least equal halves, thirds, quarters, fifths, or tenths. As a non-limiting example, each range discussed herein can be readily broken down into a lower third, middle third, and upper third, etc.

As will also be understood by one skilled in the art, all language such as "up to," "at least," "greater than," "less than," "more than," "or more," and the like, include the number recited and such terms refer to ranges that can be subsequently broken down into sub-ranges as discussed above. In the same manner, all ratios recited herein also include all sub-ratios falling within the broader ratio. Accordingly, specific values recited for radicals, substituents, and ranges, are for illustration only; they do not exclude other defined values or other values within defined ranges for radicals and substituents.

One skilled in the art will also readily recognize that where members are grouped together in a common manner, such as in a Markush group, the invention encompasses not only the entire group listed as a whole, but each member of the group individually and all possible subgroups of the main group. Additionally, for all purposes, the invention encompasses not only the main group, but also the main group absent one or more of the group members. The invention therefore envisages the explicit exclusion of any one or more of members of a recited group. Accordingly, provisos may apply to any of the disclosed categories or embodiments whereby any one or more of the recited elements, species, or embodiments, may be excluded from such categories or embodiments, for example, as used in an explicit negative limitation.

## Claims

1. A wear resistant composite material (200) comprising:
a first thickness of material (210) having a wear surface (210W);
a second thickness of material (214) having an exterior surface (214B);
a thickness of wear indicator (218) located between and engaging the first thickness of material (210) and the second thickness of material (214), the thickness of wear indicator (218) having at least one colorant therein; and
the wear resistant composite material (200) having an initial overall thickness (TT) measured between the wear surface (210W) and the exterior surface (214B);
wherein the thickness of wear indicator (218) is configured to provide visual indicia of wear of the wear surface (218).

2. The wear resistant composite material (200) of claim 1, wherein the first thickness of material (210), the second thickness of material (214), and the thickness of wear indicator (218) comprise a first chemical composition.

3. The wear resistant composite material (200) of claim 1, wherein the first thickness of material (210) comprises a first chemical composition, the second thickness of material (214) comprises a second chemical composition, and the thickness of wear indicator (218) comprises a third chemical composition.

4. The wear resistant composite material (200) of claim 1, wherein the first thickness of material (210) and the second thickness of material (214) comprise a first chemical composition, and the thickness of wear indicator (218) comprises a second chemical composition.

5. The wear resistant composite material (200) of any of the preceding claims, wherein the first thickness of material (210), the second thickness of material (214), and the thickness of wear indicator (218) are integrally formed with one another.

6. The wear resistant composite material (200) of any of claims 1-4, wherein the first thickness of material (210), the second thickness of material (214), and the thickness of wear indicator (218) are distinct layers.

7. The wear resistant composite material (200) of any of the preceding claims, wherein the thickness of wear indicator (218) comprises an organic or synthetic textile.

8. The wear resistant composite material (200) of claim 7, wherein the organic or synthetic textile comprises at least one of polyester, nylon, carbon fiber veil, fiberglass veil, silicone, silica, acrylic, rayon, aramids, polybenzimidazole fiber, polypropylene, and ultra-high-molecular-weight polyethylene.

9. The wear resistant composite material (200) of any of claims 1-6, wherein thickness of wear indicator (218) comprises a laminate material.

10. The wear resistant composite material (200) of claim 9, wherein the laminate material comprises at least one of a coated glass fabric and a parting film.

11. The wear resistant composite material (200) of any of claims 1-6, wherein the thickness of wear indicator (218) comprises at least one of a colored synthetic pigment powder or paste, a composite resin, a fiberglass and composite paint, and a polypropylene coating.

12. The wear resistant composite material (200) of any of the preceding claims, wherein the at least one colorant comprises a gradient color scheme or at least two colors present in the thickness of wear indicator (218), the gradient color scheme or at least two colors comprising a change in color of the thickness of wear indicator (218) between the first thickness of material (210) and the second thickness of material (214).

13. The wear resistant composite material (200) of any of claims 1-11, wherein the at least one colorant comprises a pattern extending laterally across the thickness of wear indicator (218), the pattern comprising at least two colors.

14. The wear resistant composite material (200) of any of the preceding claims, wherein the thickness of wear indicator (218) is uniform in thickness.

15. The wear resistant composite material (200) of any of claims 1-13, wherein the thickness of wear indicator (218) is non-uniform in thickness.
